# EUROPÄISCHE PATENTSCHRIFT

(11) **EP 1 681 094 B1**
(45) Veröffentlichungstag und Bekanntmachung des Hinweises auf die Patenterteilung: **16.03.2011**
(21) Anmeldenummer: 06100368.7
(22) Anmeldetag: 16.01.2006
(51) Int. Cl.: B01J 19/24, B01J 8/02

(54) **Reaktor mit zwei oder mehreren voneinander getrennten Reaktionsräumen**
Reactor with two or more separate reaction chambers
Réacteur avec au moins deux chambres de réaction séparées

(30) Priorität: 17.01.2005 DE 102005002129
(43) Veröffentlichungstag der Anmeldung: 19.07.2006
(73) Patentinhaber: BASF SE, 67056 Ludwigshafen (DE)
(72) Erfinder: Stäck, Bianca, 68165, Mannheim (DE); Kaibel, Gerd, 68623, Lampertheim (DE); Poplow, Frank, 67065, Ludwigshafen (DE); Zehner, Peter, 67071, Ludwigshafen (DE)
(74) Vertreter: Kern, Hedwig

(56) Entgegenhaltungen:
- EP-A- 0 885 653
- EP-A- 1 180 395
- EP-A- 1 300 190
- WO-A-01/94005

## Beschreibung

Die Erfindung betrifft einen Reaktor sowie ein Verfahren in einem Reaktor mit einem Reaktorinnenraum, der in zwei oder mehrere voneinander getrennte Reaktionsräume aufgeteilt ist.

In der Regel wird an die Betriebsweise von Reaktoren die Anforderung gestellt, dass sich über die Querschnittsfläche des Reaktors möglichst gleiche Konzentrationen und Temperaturen einstellen. Diese Vergleichmäßigung wird insbesondere durch die nachfolgenden aufgeführten Einbauten gefördert, die einzeln oder in Kombination miteinander eingesetzt werden können: Gas- und Flüssigkeitsverteiler unterschiedlicher Bauformen, die am Reaktoreintritt angeordnet sind, Zwischenverteiler für Gas und/oder Flüssigkeit, statische oder dynamische Mischeinrichtungen am Reaktoreingang, um frisch zugeführte Reaktanden mit rückgeführten Reaktanden gleichmäßig zu mischen oder um Katalysatoren gleichmäßig vermischt dem Reaktor zuzuführen oder auch Einbauten in Kreuzkanalstruktur oder auch andere, meist einen Druckverlust verursachende Bauformen, die neben der Vergleichmäßigung von Temperatur und Konzentration die Strömungsgeschwindigkeit über den Reaktorquerschnitt ausgleichen.

Häufig erfordert es die Reaktionsführung jedoch, in unterschiedlichen Reaktionsstufen jeweils unterschiedliche Betriebsbedingungen, beispielsweise bezüglich Zusammensetzung und/oder Konzentration des Reaktionsgemisches, Temperatur oder hydraulischer Belastung einzustellen. Eine klassische Verschaltung, die insbesondere durch Verweilzeitanforderungen und Anforderungen an die Wärmeabführung bedingt ist, ist beispielsweise eine Anordnung von Haupt- und Nachreaktor, wobei der Hauptreaktor im Kreislauf, häufig mit externer Wärmeabführung und der Nachreaktor in einmaligem Durchgang betrieben wird.

Aus der Destillationstechnik sind sogenannte Trennwandkolonnen bekannt, d.h. Kolonnen mit einem in Kolonnenlängsrichtung angeordneten ebenen Blech, der Trennwand, die den Kolonneninnenraum in einen Zuführbereich, einen Entnahmebereich, einen oberen gemeinsamen Kolonnenbereich und einen unteren gemeinsamen Kolonnenbereich auftrennt und dadurch in Teilbereichen des Kolonneninnenraums eine Vermischung von Flüssigkeits- und Brüdenströmen verhindert. Trennwandkolonnen sind beispielsweise in EP-A 0 126 288 oder EP-A 0 133 510 beschrieben.

In EP-A 1 338 333 ist eine Reaktorkaskade aus Haupt- und Nachreaktor beschrieben, wobei einer der Reaktoren den anderen jeweils vollständig umschließt. Diese Anordnung hat den Vorteil, dass nur einer, und zwar der äußere Reaktor, auf Druck ausgelegt werden muss, nicht jedoch der innenliegende Reaktor.

Es war demgegenüber Aufgabe der Erfindung, eine weitere, konstruktiv einfachere, flexibler nutzbare Variante für einen Reaktor mit einem Reaktorinnenraum, der in zwei oder mehrere voneinander getrennte Reaktionsräume aufgeteilt ist, zur Verfügung zu stellen.

Die Lösung besteht in einem Reaktor zur Durchführung von Gasphasenreaktionen, Gas/Flüssig-, Flüssig/Flüssig- oder Gas/Flüssig/Fest-Reaktionen mit einem Reaktorinnenraum, der in zwei oder mehrere voneinander vollständig getrennte Reaktionsräume aufgeteilt ist, der dadurch gekennzeichnet ist, dass die Auftrennung des Reaktorinnenraumes über eine oder mehrere in Längsrichtung des Reaktors angeordnete Trennwände erfolgt, die als ebenes oder überwiegend ebenes Blech ausgebildet sind, das im Reaktorinnenraum eingezogen ist.

Die Erfindung ist nicht eingeschränkt bezüglich der Geometrie des Reaktors: Reaktoren sind in der Regel zylindrische Apparate, möglich sind jedoch auch beispielsweise prismatische, insbesondere quaderförmige Apparate.

Die Erfindung ist auch nicht eingeschränkt bezüglich der Phasen des Reaktionsgemisches: es kann sich um Gasphasenreaktionen, Gas/Flüssig- Flüssig/Flüssig-, Flüssig/Fest- oder Gas/Flüssig/Fest-Reaktionen handeln.

Erfindungsgemäß ist der Reaktorinnenraum in zwei oder mehrere voneinander getrennte Reaktionsräume über eine oder mehrere in Längsrichtung des Reaktors angeordnete Trennwände aufgeteilt.

Als Trennwand wird in bekannter Weise ein ebenes oder überwiegend ebenes Blech bezeichnet, das im Reaktorinnenraum eingezogen ist.

Vorliegend können eine oder mehrere Trennwände vorgesehen sein. Diese unterteilen den Innenraum des Reaktors in voneinander getrennte Reaktionsräume: hierbei kann es sich um eine flüssigkeits- oder flüssigkeits- und gasdichte Trennung handeln.

Die Erfindung ist nicht eingeschränkt bezüglich der konkreten konstruktiven Ausgestaltung der Trennwand, es können insbesondere die für Trennkolonnen bekannten Ausführungsformen eingesetzt werden.

Eine nur flüssigkeitsdichte Trennung zwischen zwei Reaktionsräumen liegt beispielsweise in einer bevorzugten Ausführungsform vor, in der die Trennwand doppelwandig ausgeführt ist, eine Zuströmöffnung für Gas in den Innenraum der doppelwandigen Trennwand aus einem ersten Reaktionsraum oberhalb eines Flüssigkeitsspiegels in denselben und eine Abströmöffnung für Gas aus dem Innenraum der doppelwandigen Trennwand in einen zweiten Reaktionsraum vorgesehen ist. In diesem Fall fungiert das Gas auch als Wärmeisolationsmittel in der doppelwandigen Trennwand. Eine derartige Ausführungsform ist beispielsweise für Hydrierungen vorteilhaft.

Die Trennwand kann fest eingeschweißt oder auch lose, mittig oder außermittig im Reaktor angeordnet sein. Die Trennwand kann thermisch isolierend, insbesondere doppelwandig, ausgeführt sein.

Da die Trennwand oder die Trennwände den Innenraum des Reaktors in zwei oder mehrere Reaktionsräume vollständig trennt (trennen) soll, ist es erforderlich, diese vollständig, d.h. bis zu den beiden Reaktorenden, durchzuziehen.

Gegenstand der Erfindung ist auch ein Verfahren zur Durchführung von Gasphasenreaktionen, Gas/Flüssig- oder Gas/Flüssig/Fest-Reaktionen in einem Reaktor mit einem Reaktorinnenraum, der durch eine oder mehrere in Längsrichtung des Reaktors angeordnete Trennwände in zwei oder mehrere voneinander getrennte Reaktionsräume aufgeteilt ist, das dadurch gekennzeichnet ist, dass sich die Reaktionsgemische in den Reaktionsräumen durch die Konzentration und/oder durch die chemische Natur ihrer Komponenten unterscheiden.

Alternativ oder zusätzlich können in einem Verfahren zur Durchführung von Gasphasenreaktionen, Gas/Flüssig-, Flüssig/Flüssig-, Flüssig/Fest- oder Gas/Flüssig/Fest-Reaktionen in einem Reaktor mit einem Reaktorinnenraum, der in zwei oder mehrere voneinander getrennte Reaktionsräume aufgeteilt ist, wobei die Aufteilung des Reaktorinnenraums über eine oder mehrere in Längsrichtung des Reaktors angeordnete Trennwände erfolgt, auch die Reaktionsräume mit jeweils unterschiedlicher hydraulischer Belastung betrieben werden.

Es ist auch möglich, zusätzlich oder alternativ zu den oben beschriebenen Verfahren die Reaktionen in den einzelnen Reaktionsräumen bei jeweils unterschiedlicher Temperatur durchzuführen.

Weiterhin ist es auch möglich, zusätzlich oder alternativ zu den oben angegebenen Verfahren die Austräge aus den einzelnen Reaktionsräumen jeweils unterschiedlichen Aufarbeitungsschritten zuzuführen.

Besonders vorteilhaft kann das oben beschriebene Verfahren zur Metathese von Raffinat II, Dimerisierungen, Oligomerisierungen, Hydrierungen, Isomerisierungen, Oxidationen oder Halogenierungen eingesetzt werden.

Der erfindungsgemäße Reaktor und das Verfahren haben den Vorteil geringerer Investitionskosten für den Reaktor, die Reaktorperipherie und die Reaktormontage. Es können gesteigerte Ausbeuten, höhere Umsätze, verbesserte Selektivitäten sowie eine vereinfachte Aufarbeitung der Reaktionsprodukte erreicht werden.

Insbesondere kann eine Verringerung der bei der Reaktion entstehenden Mischungsentropie ermöglicht werden. Dies führt in vielen Fällen zu kostengünstigeren Verfahren mit verkleinerten Stoffströmen und verringertem Energiebedarf.

Die Erfindung wird im Folgenden anhand eines Ausführungsbeispiels und einer Zeichnung näher erläutert.

### Es zeigen im Einzelnen:

- Figur 1A: eine Ausführungsform für eine Anlage zur Metathese von Raffinat II mit einem erfindungsgemäßen Reaktor,
- Figur 1 B: die schematische Darstellung einer Anlage zur Metathese von Raffinat II nach dem Stand der Technik,
- Figur 2: eine Ausführungsform eines erfindungsgemäßen Reaktors zur Durchführung eines Verfahrens mit Zwischeneinspeisung von Reaktanden,
- **Figur 3**: eine Ausführungsform eines erfindungsgemäßen Reaktors mit Rohrreaktorcharakteristik und verkürzter Rohrlänge,
- Figur 4A: eine Ausführungsform eines erfindungsgemäßen Reaktors mit apparativer Einbeziehung eines Nachreaktors,
- Figur 4B: eine Anordnung mit Vor- und Nachreaktor nach dem Stand der Technik und
- Figur 5: eine Ausführungsform eines erfindungsgemäßen Reaktors mit paralleler Anordnung von hintereinander geschalteten Reaktorabschnitten.

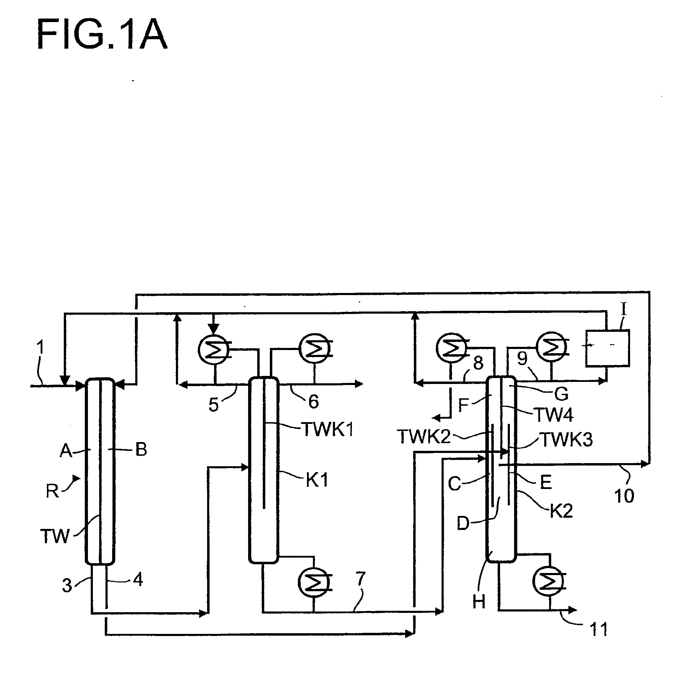

Figur 1A zeigt eine Anlage zur Metathese von Raffinat II mit einem Reaktor R, dessen Innenraum durch eine Trennwand TW, die bis zu beiden Reaktorenden durchgezogen ist, in einen Reaktionsraum A und einen Reaktionsraum B aufgeteilt ist. Dem Reaktionsraum A wird im oberen Bereich desselben der Eduktstrom 1 zugeführt, zusammen mit einem Teil des Stromes 9 als Recyclierungsstrom. Der Sumpfstrom aus dem ersten Reaktionsraum A wird einer ersten Destillationskolonne K1 mit bis oben durchgezogener Trennwand TWK1 in den Zuführbereich derselben aufgegeben. Aus der Destillationskolonne K1 wird aus einem ersten Teilbereich derselben ein Kopfstrom 5 abgezogen, teilweise als Rücklauf wieder auf denselben Teilbereich aufgegeben und im Übrigen dem Reaktionsraum A des Reaktors R erneut zugeführt. Aus dem zweiten Teilbereich der Trennwandkolonne K1 wird ein zweiter Kopfstrom 6 abgezogen, teilweise als Rücklauf auf denselben Teilbereich wieder aufgegeben und im Übrigen abgezogen. Der Sumpfstrom 7 aus der Trennwandkolonne K1 wird einer zweiten Trennwandkolonne K2 zugeführt.

Die Trennwandkolonne K2 weist insgesamt drei Trennwände auf, wobei die Trennwände TWK2 und TWK3 jeweils nur im mittleren Bereich der Kolonne K2 angeordnet sind, d.h. nicht bis zu den Kolonnenenden durchgezogen sind und die mittlere Trennwand, TWK4, bis zum oberen Ende der Kolonne durchgezogen ist. Die Trennwände TWK2, TWK3 und TWK4 teilen den Innenraum der Kolonne K2 in die folgenden Bereiche auf: einen Zuführbereich C, einen weiteren Zuführbereich E, einen mittleren Entnahmebereich D, zwei obere, voneinander getrennte Entnahmebereiche F und G sowie einen unteren gemeinsamen Kolonnenbereich H.

Strom 7 wird in den Zuführbereich E geleitet und in den Zuführbereich C wird der Sumpfstrom 4 aus dem zweiten Reaktionsraum B des Reaktors R geleitet. Aus dem Bereich D der Trennwandkolonne K2 wird ein Strom 10 abgezogen, der in den oberen Bereich des Reaktionsraums B des Reaktors R recycliert wird. Aus dem ersten oberen Teilbereich F der Trennwandkolonne K2 wird ein Strom 8 abgezogen, teilweise als Rücklauf wieder auf denselben Teilbereich aufgegeben, teilweise in den Reaktionsraum A des Reaktors R recycliert und im Übrigen abgezogen. Aus dem Teilbereich G der Trennwandkolonne K2 wird ein Kopfstrom 9 abgezogen, teilweise als Rücklauf wieder auf denselben Teilbereich aufgegeben und im Übrigen gegebenenfalls einem Isomerisierungsreaktor I zugeführt und anschließend erneut in den Reaktionsraum A des Reaktors R recycliert. Aus dem unteren gemeinsamen Kolonnenbereich H wird ein Strom 11 abgezogen.

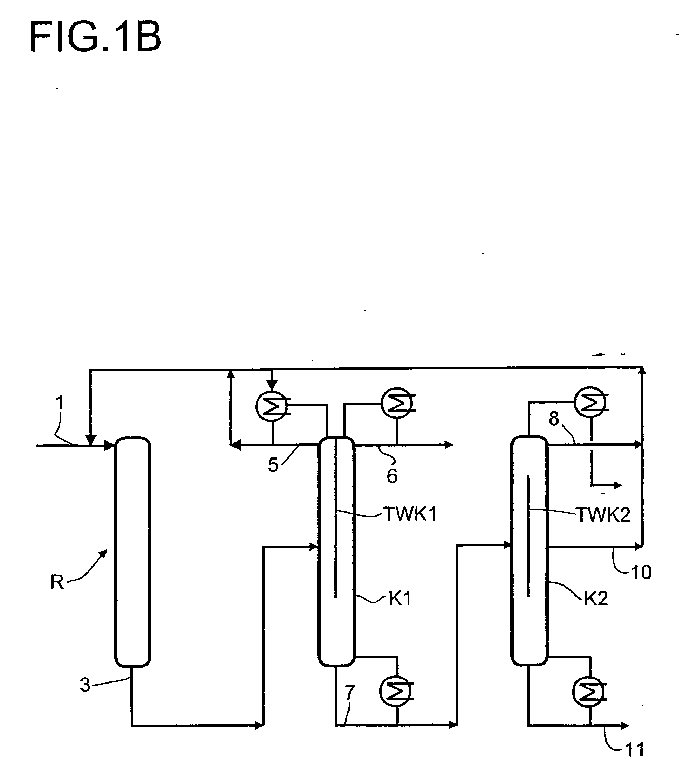

Figur 1B zeigt demgegenüber eine Anlage nach dem Stand der Technik: einem Reaktor R wird Strom 1 (Raffinat II) zugeführt. Der Sumpfstrom 3 wird einheitlich einer ersten Trennwandkolonne K1 mit bis oben durchgezogener Trennwand TWK1 zugeführt.

Aus dem ersten oberen Kolonnenbereich der Trennwandkolonne K1 wird ein Kopfstrom 5 abgezogen, teilweise als Rücklauf wieder auf denselben Teilbereich aufgegeben und im Übrigen dem Reaktor R im oberen Bereich desselben erneut zugeführt. Aus dem zweiten oberen Teilbereich der Kolonne K1 wird ein weiterer Kopfstrom 6 abgezogen, teilweise als Rücklauf wieder auf denselben Teilbereich aufgegeben und im Übrigen abgezogen. Aus der Trennwandkolonne K1 wird ein Sumpfstrom 7 abgezogen, einer zweiten Trennwandkolonne K2 im Zuführbereich derselben zugeführt, wobei die Trennwandkolonne K2 eine einzige, nicht durchgezogene Trennwand TWK2 aufweist. Aus dem Entnahmebereich der Trennwandkolonne K2 wird ein Strom 10 abgezogen, der in den Reaktor R, in den oberen Bereich desselben, recycliert wird, ein Kopfstrom 8, der teilweise abgezogen und im Übrigen, analog Strom 10 recycliert wird ,sowie ein Sumpfstrom 11.

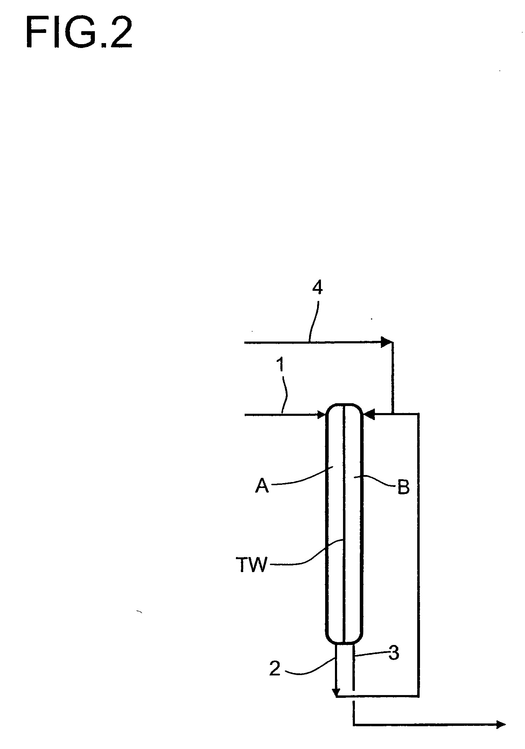

Figur 2 zeigt eine Ausführungsform eines erfindungsgemäßen Reaktors mit Zwischeneinspeisung von Edukt: einem Reaktor R mit bis zu beiden Reaktorenden durchgezogener Trennwand TW, die den Reaktorinnenraum in einen ersten Reaktionsraum A und einen zweiten Reaktionsraum B aufteilt, wird im oberen Bereich des Reaktionsraums A ein Eduktstrom 1 zugeführt und am unteren Ende des Reaktionsraums A ein Strom 2 abgezogen. Strom 2 wird in den oberen Bereich des Reaktionsraums B geleitet. Aus dem unteren Bereich des Reaktionsraumes B wird der Produktstrom 3 abgezogen. Dem oberen Bereich des Reaktionsraumes B wird ein zusätzlicher Eduktstrom 4 zugeführt.

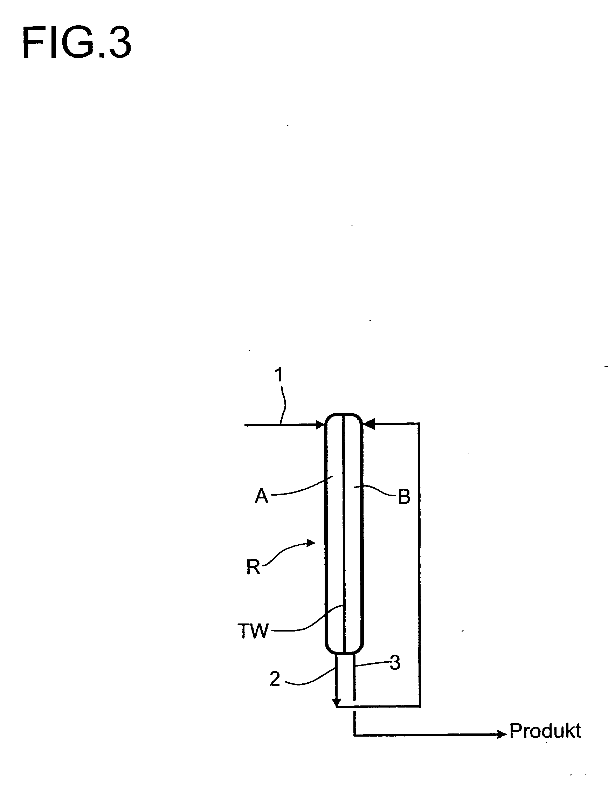

Figur 3 zeigt eine Ausführungsform eines erfindungsgemäßen Reaktors mit Rohrreaktorcharakteristik und verkürzter Rohrlänge. Dem oberen Bereich des Reaktionsraumes A wird ein Eduktstrom 1 zugeführt und aus dem unteren Bereich desselben ein Strom 2 abgezogen, der auf den oberen Bereich des zweiten Reaktionsraumes B aufgegeben wird. Aus dem zweiten Reaktionsraum B wird ein Produktstrom 3 abgezogen.

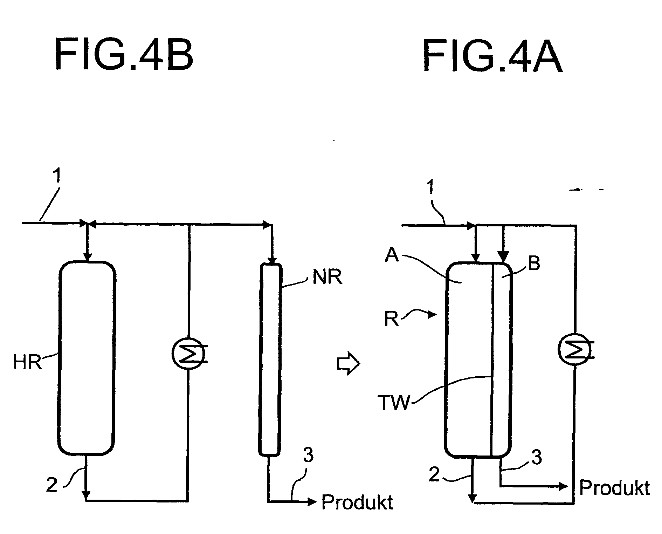

Figur 4a zeigt eine Ausführungsform eines erfindungsgemäßen Reaktors R mit Einbeziehung eines Nachreaktors. Dem oberen Bereich des ersten Reaktionsraumes A wird der Eduktstrom 1 sowie ein Teil des rückgeführten Stromes 2 zugeführt; ein weiterer Teil des Stromes 2 wird im oberen Bereich des Reaktionsraumes B zugeführt. Aus dem unteren Bereich des ersten Reaktionsraumes A wird ein Strom 2 abgezogen, der, gegebenenfalls über einen außenliegenden Wärmetauscher, wie in der Figur bevorzugt dargestellt, zurückgeführt wird. Aus dem unteren Bereich des zweiten Reaktionsraumes B wird ein Produktstrom 3 abgezogen.

Demgegenüber zeigt Figur 4B eine Anordnung mit getrenntem Haupt- und Nachreaktor nach dem Stand der Technik. Dem Hauptreaktor HR wird der Eduktstrom 1 zugeführt.

Aus dem Sumpf des Hauptreaktors HR wird ein Strom 2 abgezogen, und dem Hauptreaktor HR sowie dem Nachreaktor NR, gegebenenfalls über einen außenliegenden Wärmetauscher, im oberen Bereich desselben zugeführt. Aus dem Sumpf des Nachreaktors NR wird ein Produktstrom 3 abgezogen.

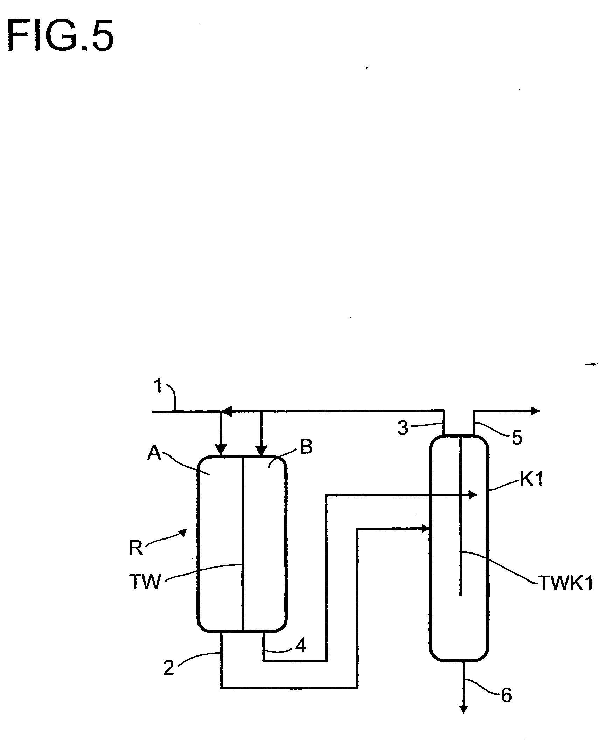

Figur 5 zeigt die schematische Darstellung einer Anlage mit einem erfindungsgemäßen Reaktor mit hintereinander geschalteten Reaktorabschnitten.

Einem Reaktor R mit Trennwand TW und Reaktionsräumen A und B wird im oberen Bereich des Reaktionsraumes A ein Strom 1 zugeführt und aus dem unteren Bereich des Reaktionsraumes A ein Strom 2 abgezogen. Dieser wird dem Zuführbereich einer Trennwandkolonne K1 mit bis oben durchgezogener Trennwand TWK1 zugeführt. Aus dem ersten oberen Teilbereich der Trennwandkolonne K1 wird ein erster Kopfstrom 3 abgezogen, bevorzugt der teilweise in den ersten Reaktionsraum A und teilweise dem zweiten Reaktionsraum B des Reaktors R im oberen Bereich derselben zugeführt wird. Aus dem unteren Bereich des zweiten Reaktionsraumes B wird ein Strom 4 abgezogen, der in den zweiten Teilbereich der Trennwandkolonne K1 geleitet wird. Aus dem zweiten Teilbereich der Trennwandkolonne K1 wird ein Kopfstrom 5 abgezogen, der teilweise in den Reaktionsraum B zurückgeführt werden kann und aus dem unteren gemeinsamen Kolonnenbereich der Trennwandkolonne K1 ein Sumpfstrom 6.

### Ausführungsbeispiel:

In einer Anlage entsprechend der schematischen Darstellung in Figur 1A wird dem Reaktor R ein Eduktstrom 1, enthaltend Raffinat II, im oberen Bereich des ersten Reaktionsraumes A zugeführt. Raffinat II enthält als Hauptkomponenten 1-Buten, 2-Buten, n-Butan und Isobutan.

In den Reaktionsraum A werden darüber hinaus Ethen sowie Butene/Butane zurückgeführt. Der Reaktionsaustrag, aus dem ersten Reaktionsraum A, Strom 3, enthält, wie bei der Metathese von Raffinat II nach dem Stand der Technik, alle bei der Metathese entstehenden Komponenten und muss in zwei hintereinander geschalteten Destillationskolonnen, K1 und K2 aufgetrennt werden. Im Reaktionsraum B findet die Metathese von 2-Penten statt, das als Rückführstrom 10 zugeführt wird. Dabei werden kein Ethen und kein Propin gebildet. Entsprechend enthält der Austrag aus dem zweiten Reaktionsraum B, Strom 4, nur 2-Buten, 2-Penten und 3-Hexen. Die Auftrennung dieses Stromes erfolgt allein in der zweiten Destillationskolonne K2, die erste, teure Druckkolonne K1 wird entlastet. Vorteilhaft ist ferner, dass der C4-Anteil aus reinem 2-Buten besteht. Entsprechend wird am Kopf der zweiten Destillationskolonne K2 ein Strom 9 abgezogen, der reines 2-Buten enthält und der somit zur Gewinnung von 1-Buten in einem Isomerisierungsreaktor I wirksamer isomerisiert werden kann als ein Gemisch von Buten-Isomeren.

In der ersten Trennwandkolonne K1 muss lediglich der Sumpfaustrag aus dem ersten Reaktionsraum A, Strom 3, in einen Ethen enthaltenden Kopfstrom 5 und einen Propen enthaltenden Kopfstrom 6 aufgetrennt werden.

Der aus dem Reaktionsraum B abgezogene Sumpfstrom 4 enthält kein Ethen und kein Propen und kann unmittelbar der zweiten Trennwandkolonne K2 zugeführt werden. Der Kopfstrom 8 aus dem ersten oberen Teilbereich F der Trennwandkolonne K2 enthält ein Gemisch von C4-Kohlenwasserstoffen, und zwar 1-Buten, 2-Buten, n-Butan und Isobutan und wird teilweise dem ersten Reaktionsraum A wieder zugeführt. Aus dem unteren gemeinsamen Kolonnenbereich H der zweiten Trennwandkolonne K2 wird ein das Wertprodukt 3-Hexen enthaltender Produktstrom 11 abgezogen.

Gegenüber einer Anlage nach dem Stand der Technik, wie in Figur 1B dargestellt, ist das Reaktorvolumen um etwa 15%, der Energiebedarf für die destillative Aufarbeitung um etwa 10% verringert.

## Patentansprüche

1. Reaktor zur Durchführung von Gasphasenreaktionen, Gas/Flüssig-, Flüssig/Flüssig-, Flüssig/Fest- oder Gas/Flüssig/Fest-Reaktionen mit einem Reaktorinnenraum, der in zwei oder mehrere voneinander vollständig getrennte Reaktionsräume aufgeteilt ist, **dadurch gekennzeichnet, dass** die Auftrennung des Reaktorinnenraumes über eine oder mehrere in Längsrichtung des Reaktors angeordnete Trennwände erfolgt, die als ebenes oder überwiegend ebenes Blech ausgebildet sind, das im Reaktorinnenraum eingezogen ist.

2. Reaktor nach Anspruch 1, **dadurch gekennzeichnet, dass** die Auftrennung des Reaktorinnenraums über eine Trennwand erfolgt.

3. Reaktor nach Anspruch 2, **dadurch gekennzeichnet, dass** die Trennwand außermittig angeordnet ist.

4. Reaktor nach einem der Ansprüche 1 bis 3, **dadurch gekennzeichnet, dass** die Trennwand (die Trennwände) doppelwandig ausgeführt (sind).

5. Reaktor nach einem der Ansprüche 1 bis 4, **dadurch gekennzeichnet, dass** die Reaktionsräume durch die Trennwand (die Trennwände) flüssigkeits- oder flüssigkeits- und gasdicht voneinander getrennt sind.

6. Reaktor zur Durchführung von Gas/Flüssig- oder Gas/Flüssig/Fest-Reaktionen nach Anspruch 5, **dadurch gekennzeichnet, dass** in der doppelwandigen Trennwand eine Zuströmöffnung für Gas aus einem ersten Reaktionsraum oberhalb eines Flüssigkeitsspiegels im ersten Reaktionsraum in den Innenraum der doppelwandigen Trennwand und eine Abströmöffnung für Gas aus dem Innenraum der doppelwandigen Trennwand in einen zweiten Reaktionsraum vorgesehen ist.

7. Verfahren zur Durchführung von Gasphasenreaktionen, Gas/Flüssig-, Flüssig/Flüssig-, Flüssig/Fest- oder Gas/Flüssig/Fest-Reaktionen in einem Reaktor mit einem Reaktorinnenraum, der durch eine oder mehrere in Längsrichtung des Reaktors angeordnete Trennwände, die als ebenes oder überwiegend ebenes Blech ausgebildet sind, das im Reaktorinnenraum eingezogen ist, in zwei oder mehrere voneinander vollständig getrennte Reaktionsräume aufgeteilt ist.

8. Verfahren nach Anspruch 7, **dadurch gekennzeichnet, dass** sich die Reaktionsgemische in den Reaktionsräumen durch die Konzentration und/oder durch die chemische Natur ihrer Komponenten unterscheiden.

9. Verfahren nach Anspruch 7 oder 8, **dadurch gekennzeichnet, dass** die Reaktionsräume mit unterschiedlicher hydraulischer Belastung betrieben werden.

10. Verfahren nach einem der Ansprüche 7 bis 9, **dadurch gekennzeichnet, dass** die Reaktionen in den einzelnen Reaktionsräumen jeweils bei unterschiedlicher Temperatur durchgeführt werden.

11. Verfahren nach einem der Ansprüche 7 bis 10, **dadurch gekennzeichnet, dass** die Austräge aus den einzelnen Reaktionsräumen jeweils unterschiedlichen Aufarbeitungsschritten zugeführt werden.

12. Verwendung eines Verfahrens nach einem der Ansprüche 7 bis 11 zur Metathese von Raffinat II, Dimerisierungen, Oligomerisierungen, Hydrierungen, Isomerisierungen, Oxidationen oder Halogenierungen.

## Claims

1. A reactor for carrying out gas phase reactions, gas/liquid reactions, liquid/ liquid reactions, liquid/solid reactions or gas/liquid/solid reactions, having a reactor interior which is divided into two or more completely separate reaction chambers, wherein the reactor interior is separated by one or more dividing walls which are arranged in longitudinal direction of the reactor and take the form of a flat or predominantly flat metal sheet which is inserted in the reactor interior.

2. The reactor according to claim 1, wherein the reactor interior is separated by one dividing wall.

3. The reactor according to claim 2, wherein the dividing wall is arranged eccentrically.

4. The reactor according to any of claims 1 to 3, wherein the dividing wall(s) has/have a double-walled design.

5. The reactor according to any of claims 1 to 4, wherein the reaction chambers are separated from one another in a liquid-tight or liquid- and gastight manner by the dividing wall(s).

6. The reactor for carrying out gas/liquid or gas/liquid/solid reactions according to claim 5, wherein an inflow orifice for gas from a first reaction chamber above a liquid level in the first reaction chamber into the interior of the double-walled dividing wall and an outflow orifice for gas from the interior of the double-walled dividing wall into a second reaction chamber are provided in the double-walled dividing wall.

7. A process for carrying out gas phase reactions, gas/liquid reactions, liquid/ liquid reactions, liquid/solid reactions or gas/liquid/solid reactions in a reactor having a reactor interior which is divided into two or more completely separate reaction chambers by one or more dividing walls which are arranged in the longitudinal direction of the reactor and take the form of a flat or predominantly flat metal sheet which is inserted in the reactor interior.

8. The process according to claim 7, wherein the reaction mixtures in the reaction chambers differ by the concentration and/or by the chemical nature of their components.

9. The process according to claim 7 or 8, wherein the reaction chambers are operated with different hydraulic loading.

10. The process according to any of claims 7 to 9, wherein the reactions in the individual reaction chambers are each carried out at different temperature.

11. The process according to any of claims 7 to 10, wherein the effluents from the individual reaction chambers are each fed to different workup steps.

12. The use of the process according to any of claims 7 to 11 for the metathesis of raffinate II, dimerizations, oligomerizations, hydrogenations, isomerizations, oxidations or halogenations.

## Revendications

1. Réacteur pour la réalisation de réactions en phase gazeuse, de réactions gaz/liquide, liquide/liquide, liquide/solide ou gaz/liquide/solide comprenant une chambre intérieure de réacteur qui est divisée en deux chambres de réaction ou plus complètement séparées les unes des autres, **caractérisé en ce que** la séparation de la chambre intérieure de réacteur a lieu par une ou plusieurs parois de séparation placées dans la direction longitudinale du réacteur, qui sont conçues sous la forme d'une tôle plane ou essentiellement plane qui est incorporée dans la chambre intérieure de réacteur.

2. Réacteur selon la revendication 1, **caractérisé en ce que** la séparation de la chambre intérieure de réacteur a lieu par une paroi de séparation.

3. Réacteur selon la revendication 2, **caractérisé en ce que** la paroi de séparation est placée de manière excentrée.

4. Réacteur selon l'une quelconque des revendications 1 à 3, **caractérisé en ce que** la ou les parois de séparation sont conçues à double paroi.

5. Réacteur selon l'une quelconque des revendications 1 à 4, **caractérisé en ce que** les chambres de réaction sont séparées les unes des autres par la ou les parois de séparation de manière étanche aux liquides ou aux liquides et aux gaz.

6. Réacteur pour la réalisation de réactions gaz/liquide ou gaz/liquide/solide selon la revendication 5, **caractérisé en ce qu'**une ouverture d'entrée est prévue dans la paroi de séparation à double paroi pour un gaz d'une première chambre de réaction au-dessus d'une surface de liquide dans la première chambre de réaction dans la chambre intérieure de la paroi de séparation à double paroi et une ouverture de sortie pour un gaz de la chambre intérieure de la paroi de séparation à double paroi dans une seconde chambre de réaction.

7. Procédé de réalisation de réactions en phase gazeuse, de réactions gaz/liquide, liquide/liquide, liquide/solide ou gaz/liquide/solide dans un réacteur comprenant une chambre intérieure de réacteur qui est divisée en deux chambres de réaction ou plus complètement séparées les unes des autres par une ou plusieurs parois de séparation placées dans la direction longitudinale du réacteur, qui sont conçues sous la forme d'une tôle plane ou essentiellement plane qui est incorporée dans la chambre intérieure de réacteur.

8. Procédé selon la revendication 7, **caractérisé en ce que** les mélanges réactionnels dans les chambres de réaction diffèrent par la concentration et/ou par la nature chimique de leurs composants.

9. Procédé selon la revendication 7 ou 8, **caractérisé en ce que** les chambres de réaction sont exploitées avec une charge hydraulique différente.

10. Procédé selon l'une quelconque des revendications 7 à 9, **caractérisé en ce que** les réactions dans les chambres de réaction individuelles sont chacune réalisées à une température différente.

11. Procédé selon l'une quelconque des revendications 7 à 10, **caractérisé en ce que** les sorties des chambres de réaction individuelles sont chacune introduites dans des étapes de traitement différentes.

12. Utilisation d'un procédé selon l'une quelconque des revendications 7 à 11 pour la métathèse d'un raffinat II, des dimérisations, des oligomérisations, des hydrogénations, des isomérisations, des oxydations ou des halogénations.
